# EUROPEAN PATENT SPECIFICATION

(11) **EP 0 370 819 B1**
(45) Date of publication and mention of the grant of the patent: **02.02.1994**
(21) Application number: 89312197.0
(22) Date of filing: 23.11.1989
(51) Int. Cl.: G02B 6/36, G02B 6/44

(54) **Fibre distribution arrangement**
Faserverteilanordnung
Dispositif de répartition à fibre

(30) Priority: 23.11.1988 GB 8827348
(43) Date of publication of application: 30.05.1990
(73) Proprietor: BRITISH TELECOMMUNICATIONS public limited company, London EC1A 7AJ (GB)
(72) Inventor: Merlo, Clifford Edwin, Ipswich Suffolk IP5 7RE (GB); Freeman, Robert Alan, Ipswich Suffolk IP4 5XD (GB); Frost, Peter Lewis John, Ipswich Suffolk IP5 7QF (GB)
(74) Representative: Pratt, David Martin

(56) References cited:
- EP-A- 0 146 478
- EP-A- 0 155 821
- FR-A- 2 567 657
- GB-A- 2 194 700
- PATENT ABSTRACTS OF JAPAN, vol. 5, no. 60 (P-58)[732], 23rd April 1981, page 75 P 58; & JP-A-56 12 607
- PATENT ABSTRACTS OF JAPAN, vol. 9, no. 304 (P-409)[2027], 30th November 1985; & JP-A-60 136 710

## Description

This invention relates to optical fibre distribution, and in particular to optical fibre distribution in branched networks for optical telecommunications.

Presently, optical fibres are utilized in trunk lines for telecommunications, but it is desirable to have optical transmission with other points in a network, such as in branches between an exchange and a subscriber. Elements in such branches need to be reliable under the extremes of ambient temperature, and to permit broad spectrum transmission over the range of wavelengths utilized, usually 1300 to 1550 nm. It is also necessary to ensure that minimum losses occur due to microbending as optical fibres emerge from branching elements such as couplers.

FR-A-2 567 657 describes an optical fibre distribution arrangement including a coupler array with a plurality of input and output lines.

The present invention provides an optical fibre distribution arrangement comprising a coupler array and a plurality of splice organizers, the coupler array being provided with a plurality of input lines and with a plurality of output lines, each input line and each output line being associated with a particular splice organizer, at least one splice being located on each splice organiser, and the splice organizers being mounted on a support frame so as to be capable of limited relative movement with respect to one another so as to permit access to the splices stored therein.

Advantageously, the coupler array comprises eight wavelength-independent two-by-two couplers arranged as a four-by-eight coupler. The splice organizer may be pivotally or slidingly mounted on the support frame.

Preferably, optical fibres extending from the coupler array pass into a manifold block provided with a respective capillary tube for conducting each fibre to a splice organizer.

In a preferred embodiment, the coupler array comprises a plurality of independent couplers interconnected by splices, and wherein formers are provided to control the minimum bend radius of fibres extending from the couplers, the formers being located such that alternative winding patterns are available to permit different lengths of fibre to be accommodated.

There may be a central former and two outer formers, in which case the coupler array may comprise eight two-by-two couplers located in bundles of four on opposite sides of the central former. Conveniently, the couplers are stacked in layers.

Preferably, each splice organiser comprises a tray having a groove for retaining a splice and a recess for confining loops of optical fibre under their own natural resilience.

The invention will now be described, by way of example, with reference to the accompanying drawings, in which:
Figure 1 is a side view of an optical fibre distribution point constructed in accordance with the invention;
Figure 2 is a schematic plan view of elements of Figure 1;
Figure 3 is a view of part of the distribution point of Figure 1;
Figure 4 is a diagram showing the fibre connections of the coupler array forming part of the distribution point of Figure 1;
Figure 5 is a plan view of the coupler array; and
Figure 6 is a plan view of a splice organiser forming part of the distribution point of Figure 1.

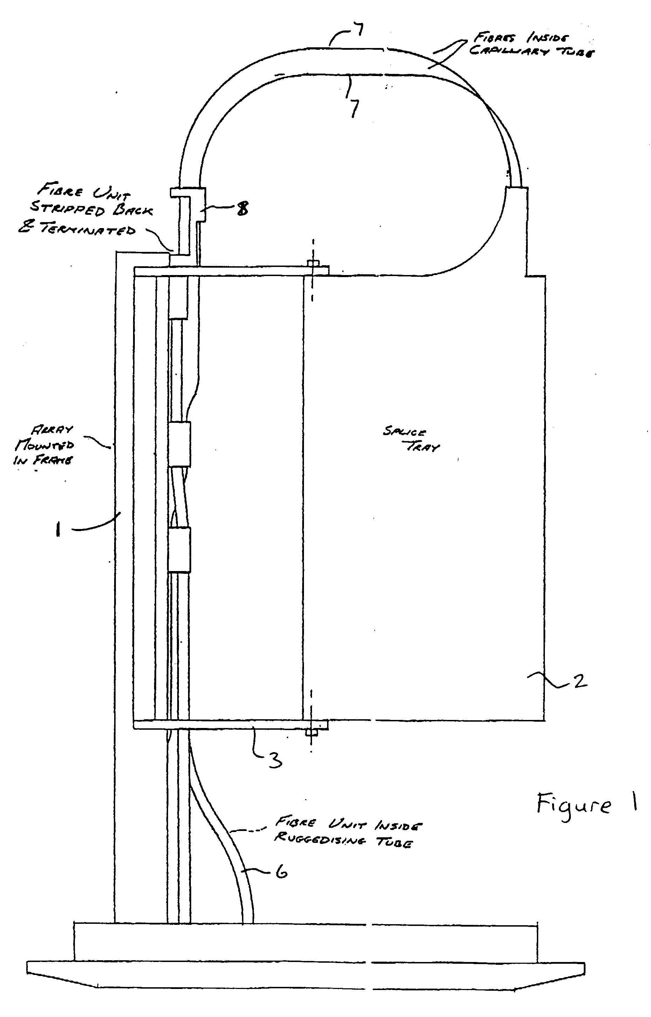

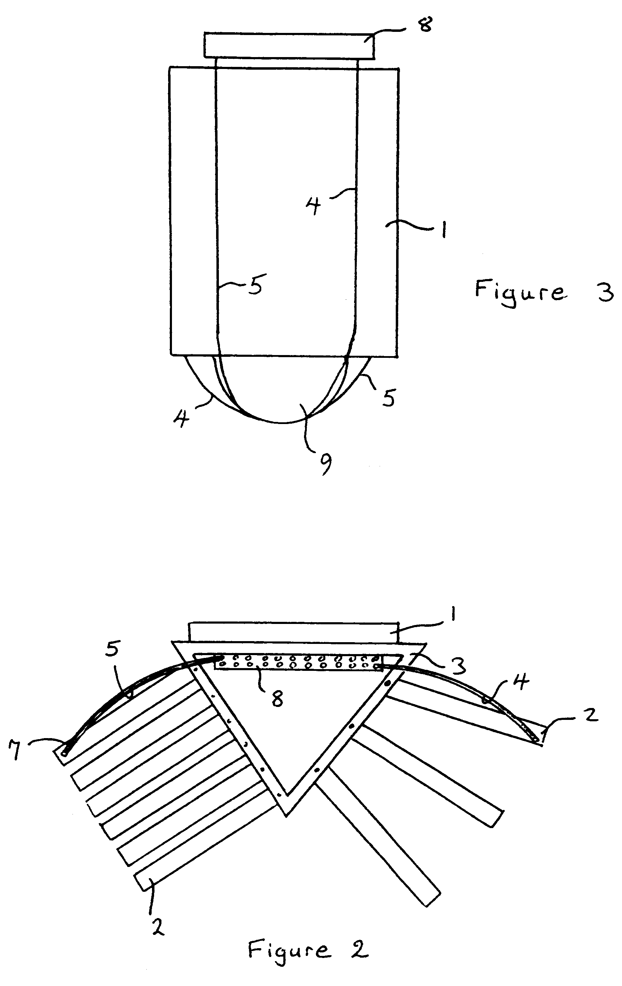

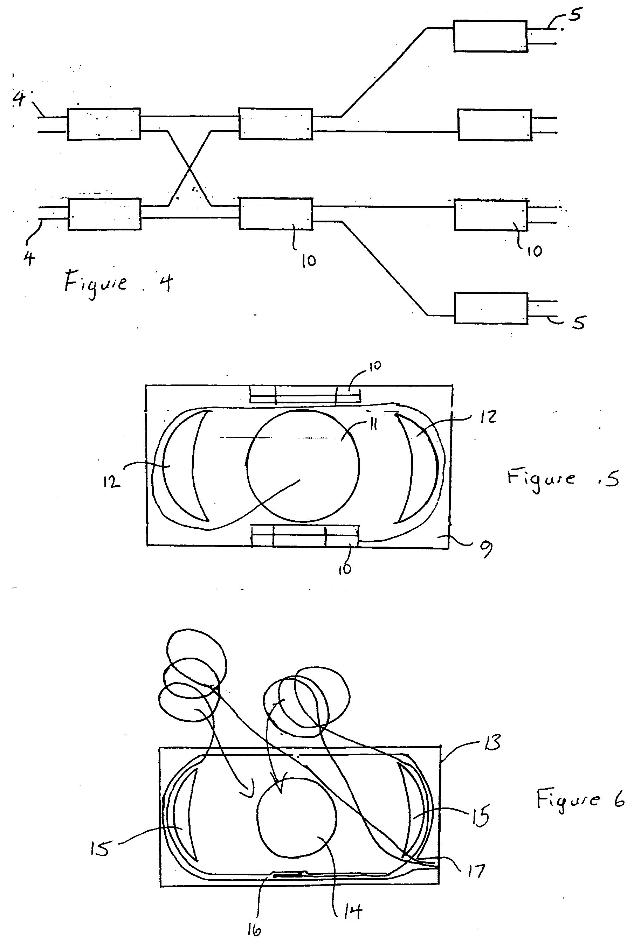

Referring to the drawings, Figures 1 to 3 show a distribution point for an optical fibre network, the distribution point comprising a four-by-eight coupler array 1 and a plurality of splice organisers 2 mounted on a support frame 3. The support frame 3 has a triangular section in plan with the coupler array 1 mounted on one side and one of the long edges of each of the splice organisers 2 being pivotally mounted to one of the other two sides. Other frame configurations are possible, for example square or rectangular, the one shown being illustrative only. The coupler array 1, which is described in more detail later, has four input lines 4 and eight output lines 5 (only one of each of which is shown in Figures 2 and 3), each input line being coupled to each output line in the arrangement shown in Figure 4. It will be realized that, in two-way communication, the input and output lines 4 and 5 operate in both directions. Throughout this specification, the term 'input' should be taken to mean that side of a branching arrangement closer to the exchange or trunk line, and the term 'output' should be taken to mean that side further away from the exchange. Generally speaking the input side will have fewer lines than the output side.

A fibre splice connection is made between each of the input lines 4 to the coupler array 1 and the incoming line from the previous stage of the distribution network, and these splices are stored in respective ones of the splice organisers 2. Each of the output lines 5 from the coupler array 1 is (or may be) spliced to an outgoing line to the next subsequent stage in the distribution network (such as an individual subscriber line), and these splices are also stored in respective ones of the splice organisers 2. Individual access to each splice is possible, without disturbing the other lines, by pivoting the splice organizers 2 apart at an appropriate point to provide access to the organiser containing the splice to be accessed. Likewise, individual access to the splice between the previous distribution stage fibre and the input to the coupler array 1 is possible. Instead of a pivoted arrangement, it is envisaged that the edges of the splice organizers 2 could be held in a channel permitting sliding, or both sliding and pivoting.

The fibres from the previous and subsequent distribution stages enter the distribution point in reinforcement tubes 6 (see Figure 1) which may conveniently extend inside the frame 3. At the top of the frame 3, these fibres enter transfer capillaries 7 held in a manifold block 8, the capillaries conducting the fibres to the splice organizers 2 where they are connected to their respective input or output fibres that extend from the coupler array 1.

The coupler array 1 is positioned with fibre entry and exit ports pointing downwards, as shown schematically in Figure 3. A curved former 9 is provided close to the ports, either as an extension of the housing of the coupler array 1 or secured to the support frame 3. The fibres extending from the ports pass around the former 9 to the inside of the support frame 3, where they pass upwardly, through the manifold block 8, each fibre then passing into a respective capillary 7 which guides it to the associated splice organiser 2 where it is spliced as described above. In order to minimize the space requirement, the fibres pass over the former 9 laterally (as viewed in Figure 3) and cross over so that they are then threaded through the manifold block 8 on the opposite hand to which they left the coupler array 1. Thus, for each input line 4 and each output line 5 there are two capillaries 7 extending over the top of the distribution point for the fibres on each side of the associated splice. The loops are made sufficiently slack to accommodate movement of the splice organizers 2 for access. In this regard, it will be noted that the pivoting arrangement enables a large movement for comparatively little extension; and, in order further to minimize extension, the connection points of the capillaries 7 to the manifold block 8 may be made closer to the organizer pivots, for example by modification of the shape of the support frame 3, or the manifold block location.

For provision of telecommunication channels, it is only necessary to have one input line and a plurality of output lines (in the present instance one input line and eight output lines) for diversification. The coupler array 1 illustrated has four input lines, each of which is split to each of the eight output lines; and, with such an arrangement, the other three input lines are connected to, or reserved for, additional services or maintenance channels, such as television or OTDR.

The splice organizers 2 may be of any convenient form, or may be replaced by connectors in some instances when loss is not a prime factor or when connectors of suitable low transmission loss are available. Preferably, however, each splice organiser 2 is double-sided, with one splice located on each side, but alternative arrangements are envisaged where the splice organiser stores associated spare fibre loops relating to a single splice on opposite sides of the organiser. In the arrangement shown in Figure 2, the righthand side (as viewed) of the support frame 3 has three splice organizers 2, each of which is double-sided to receive six (i.e. half) of the splices in the 4 input and 8 output line arrangement. The left-hand side (as viewed) of the support frame 3 has six splice organisers 2, each of which stores only a single splice, and so has the respective fibres from each side of the splice stored on its opposite sides. It will be observed that the space saved by having double splice storage on each splice organizer 2 would facilitate a more compact arrangement.

Figure 5 is a plan view of the four-by-eight coupler array 1. In order to be of a convenient overall size, the housing for the coupler array 1 is of the order of 158mm x 85mm x 16mm. One of the disadvantages of existing coupler arrays is the inflexibility of the internal arrangements to splicing errors, since the location of the coupling elements, the fibre tails and the splices is strictly controlled with little storage space for space lengths of fibre. Consequently, a splice failure can render the components useless, unless a splice location requiring a shorter length of fibre to reach it is still available. The coupler array 1 has guides for spare fibre tail lengths, the guides providing alternative winding paths so that, in the event of a splice failure, the fibre tail lengths may be wound round a shorter route, and the fibre shortened for a subsequent splicing attempt.

Referring to Figure 5, the housing for the coupler array 1 comprises a tray 9 which has recesses on each side for retaining a bundle of four two-by-two couplers 10, a raised circular central former 11 and a pair of raised curved end formers 12. The couplers 10 are each wavelength-independent two-by-two couplers, and are connected in the scheme shown in Figure 4. In order to accommodate the couplers 10 in the limited space, they are arranged side-by-side in pairs on opposite sides of the central former 11, and two layers deep. A fibre tail from one of the couplers 10 is wound first around the outside of the curved former 12 on the side of the coupler 10 from which the fibre tail extends, and then around the outside of the other curved former 12, and then diagonally over the central circular former 11, where it is spliced to a fibre tail of the other of the couplers 10 to which it is connected. A single fibre track is shown in Figure 5. In the event of a splice failure, the fibre tails associated with the failed splice may be unwound and rewound around the guides in a shorter path, for example by passing the first curve of the fibre tail around the central former 11 rather than around one of the curved formers 12. The fibres may then be shortened, and a new splice made. In this way, at least a second attempt at splicing is enabled. Additional lengths of spare fibre, which could be used to permit a larger number of splice attempts, may also be stored by provision of extra loops or a different winding pattern, (e.g. a figure of 8 may be used).

Grooves for retaining the splices may be provided, or the splices may be glued in position on the central former 11. One advantage of the looped winding around the formers 11 and 12 is that comparatively loose turns may be made, so that the fibres are not pulled into close contact with the edges of the formers, and this enables the loops to accommodate dimensional changes due to thermal expansion without strain. The formers 11 and 12 may be varied in shape. In particular, the central former 11 may be split or elongated. A four-by-four coupler may be made in a similar way by utilizing only four couplers 10, and arranging these in a single layer rather than in a two-layer arrangement as is used for the four-by-eight coupler described.

Figure 6 shows a preferred splice organizer which enables a single splice to be stored on one side thereof. This splice organizer comprises a tray 13 having a central raised circular former 14, two raised curved end formers 15, and a splice-retaining groove 16. The splice is positioned in the groove 16, and the fibres pass out of the organizer along a channel 17; and, when the splice organizer is in a distribution assembly, into capillaries 7. It is for this latter purpose, that the fibres exit in the same direction. In alternative uses, a similar arrangement (but with separate exit channels) may be preferred. Spare loops of fibre on each side of the splice are stored in the organiser by forming coils of fibre and placing these (as indicated by the arrows in Figure 6) over the central former 14, with the first bend after the splice being passed around the outer side of one of the curved formers 15. The natural resilience of the fibres will cause the coils to expand outwardly into a configuration of varying diameter elliptical turns. This procedure is then repeated for the fibre on the other side of the splice. Care has to be taken not to coil the fibres over tightly in the first instance. A hinged or clip-on lid may be provided to cover the organizer, or it may be arranged to engage with an adjacent organizer so that the confronting organizers effectively form covers for each other. The reverse side of the organizer preferably has a similar configuration for storing another splice, thereby enabling six organizers independently to store the twelve splices associated with the distribution point described.

## Claims

1. An optical fibre distribution arrangement comprising a coupler array (1) which is provided with a plurality of input lines (4) and with a plurality of output lines (5), characterised in that the distribution arrangement also comprises a plurality of splice organisers (2), in that each input line (4) and each output line (5) is associated with a particular splice organiser (2), in that at least one splice is located on each splice organiser (2), and in that the splice organisers (2) are mounted on a support frame (3) so as to be capable of limited relative movement with respect to one another so as to permit access to the splices stored therein.

2. An arrangement as claimed in claim 1, wherein the coupler array (1) comprises eight wavelength-independent two-by-two couplers (10) arranged as a four-by-eight coupler.

3. An arrangement as claimed in claim 1 or claim 2, wherein the splice organisers (2) are pivotally mounted on the support frame (3).

4. An arrangement as claimed in claim 1 or claim 2, wherein the splice organisers (2) are slidingly mounted on the support frame (3).

5. An arrangement as claimed in any one of claims 1 to 4, wherein optical fibres extending from the coupler array (1) pass into a manifold block (8) provided with a respective capillary tube (7) for conducting each fibre to a splice organiser (2).

6. An arrangement as claimed in any one of claims 1 to 5, wherein the coupler array (1) comprises a plurality of independent couplers (10) interconnected by splices, and wherein formers (11,12) are provided to control the minimum bend radius of fibres extending from the couplers (10), the formers (11,12) being located such that alternative winding patterns are available to permit different lengths of fibre to be accommodated.

7. An arrangement as claimed in claim 6, wherein there is a central former (11) and two outer formers (12).

8. An arrangement as claimed in claim 7, wherein the coupler array (1) comprises eight two-by-two coupler (10) located in bundles of four on opposite sides of the central former (11).

9. An arrangement as claimed in any one of claims 6 to 8, wherein the couplers (10) are stacked in layers.

10. An arrangement as claimed in any one of claims 1 to 9, wherein each splice organiser (2) comprises a tray (13) having a groove (16) for retaining a splice and a recess for confining loops of optical fibre under their own natural resilience.

## Patentansprüche

1. Lichtwellenleiter-Verteileranordnung mit einer Koppelgruppe (1), die eine Vielzahl von Eingangsleitungen (4) und eine Vielzahl von Ausgangsleitungen (5) aufweist,
**dadurch gekennzeichnet,** daß
die Verteileranordnung ferner mit einer Vielzahl von Spleißordnern (2) versehen ist, wobei jede Eingangsleitung (4) und jede Ausgangsleitung (5) mit je einem Spleißordner (2) verbunden ist, daß wenigstens ein Spleiß auf jedem Spleißordner angeordnet und die Spleßordner (2) auf einem Tragrahmen (3) montiert sind, so daß sie in begrenzter Weise relativ zueinander beweglich sind, um den Zugang zu den darin enthaltenen Spleißen zu ermöglichen.

2. Verteileranordnung nach Anspruch 1, wobei die Koppelgruppe (1) acht von der Wellenlänge unabhängige Zwei-Zu-Zwei-koppler (10) enthält, die als Vier-Mal-Acht-Koppler angeordnet sind.

3. Verteileranordnung nach Anspruch 1 oder 2, wobei die Spleißordner (2) drehbar auf dem Tragrahmen (3) gelagert sind.

4. Verteileranordnung nach Anspruch 1 oder 2, wobei die Spleißordner (2) verschiebbar auf dem Tragrahmen (3) gelagert sind.

5. Verteileranordnung nach einem der Ansprüche 1 bis 4, dadurch gekennzeichnet, daß Lichtwellenleiter, die aus der Koppelgruppe (1) austreten, in einen Vielfachblock (8) eintreten, der mit einer entsprechenden Kapillarröhre (7) zur Führung jeder Faser in einen Spleißordner (2) versehen ist.

6. Verteileranordnung nach einem der Ansprüche 1 bis 5, dadurch gekennzeichnet, daß die Koppelgruppe (1) eine Vielzahl unabhängiger Koppler (10) enthält, die untereinander durch Spleiße verbunden sind, und daß Schablonen (11,12) vorgesehen sind, um den minimalen Biegeradius der aus den Kopplern (10) austretenden Fasern zu kontrollieren, wobei die Schablonen (11, 12) so angeordnet sind, daß alternative Wicklungsmuster möglich sind, um verschiedene Längen der Faser unterzubringen.

7. Verteileranordnung nach Anspruch 6, gekennzeichnet durch eine zentrale Schablone (11) und zwei äußere Schablonen (12).

8. Verteileranordnung nach Anspruch 7, dadurch gekennzeichnet, daß die Koppelgruppe (1) acht Zwei-Zu-Zwei-Koppler (10) enthält, die in Bündeln von vier auf entgegengesetzten Seiten der zentralen Schablone (11) angeordnet sind.

9. Verteileranordnung nach einem der Ansprüche 6 bis 8, dadurch gekennzeichnet, daß die Koppler (10) in Lagen gestapelt sind.

10. Verteileranordnung nach einem der Ansprüche 1 bis 9, dadurch gekennzeichnet, daß jeder Spleißordner (2) ein Tablett (13) mit einer Nut (16) zur Aufnahme des Spleißes und eine Ausnehmung zum Einschieben von Schleifen von Lichtwellenleitern unter ihrer eigenen natürlichen Federkraft aufweist.

## Revendications

1. Un dispositif de distribution de fibres optiques comprenant un groupe de coupleurs (1) pourvu d'une pluralité de lignes d'entrée (4) et d'une pluralité de lignes de sortie (5) caractérisé en ce que le dispositif de distribution comprend également une pluralité de platines d'assemblage (2), que chaque ligne d'entrée (4) et chaque ligne de sortie (5) est associée à une platine d'assemblage particulière (2), qu'au moins une épissure est prévue sur chaque platine d'assemblage (2), et que les platines d'assemblage (2) sont montées sur un châssis de support (3) de manière à pouvoir effectuer un déplacement relatif l'une par rapport à l'autre pour donner accès aux épissures stockées à l'intérieur.

2. Un dispositif selon la revendication 1, dans lequel la groupe de coupleurs (1) comprend huit coupleurs deux-pardeux (10), indépendants de la longueur d'onde, disposés sous forme d'un coupleur quatre-par-huit.

3. Un dispositif selon la revendication 1 ou 2, dans lequel les platines d'assemblage (2) sont montées à rotation sur le châssis de support (3).

4. Un dispositif selon la revendication 1 ou 2, dans lequel les platines d'assemblage (2) sont montées glissantes sur le châssis de support (3).

5. Un dispositif selon l'une quelconque des revendications 1 à 4, dans lequel les fibres optiques s'étendant à partir du groupe de coupleurs (1) passent dans un bloc formant collecteur (8) pourvu d'un tube capillaire respectif (7) pour amener chaque fibre optique sur une platine d'assemblage (2).

6. Un dispositif selon l'une quelconque des revendications 1 à 5, dans lequel le groupe de coupleurs (1) comprend une pluralité de coupleurs indépendants (10) interconnectés par des épissures, et dans lequel il est prévu des gabarits (11, 12) pour ajuster le rayon de courbure minimal des fibres optiques sortant des coupleurs (10), les gabarits (11, 12) étant disposés de manière à ménager des schémas d'enroulement en variante pour pouvoir recevoir des longueurs différentes de fibres optiques.

7. Un dispositif selon la revendication 6, dans lequel il est prévu un gabarit central (11) et deux gabarits extérieurs (12).

8. Un dispositif selon la revendication 7, dans lequel le groupe de coupleurs (1) comprend huit coupleurs deux-pardeux (10) disposés par faisceaux de quatre sur les côtés opposés du gabarit central (11).

9. Un dispositif selon l'une quelconque des revendications 6 à 8, dans lequel les coupleurs (10) sont superposés par couches.

10. Un dispositif selon l'une quelconque des revendications 1 à 9, dans lequel chaque platine d'assemblage (2) comprend un plateau (13) muni d'une rainure (16) pour retenir une épissure, et une cavité pour enfermer les boucles de fibres optiques sous l'effet de leur propre élasticité naturelle.
